# EUROPÄISCHE PATENTANMELDUNG

(11) **EP 4 155 172 A1**
(43) Veröffentlichungstag der Anmeldung: **29.03.2023**
(21) Anmeldenummer: 21199505.5
(22) Anmeldetag: 28.09.2021
(51) Int. Cl.: B62D 25/00, B62D 29/00

(54) **VERSTÄRKUNGSELEMENT ZUR VERSTÄRKUNG EINES STRUKTURELEMENTES**

(71) Anmelder: Sika Technology AG, 6340 Baar (CH)
(72) Erfinder: GUILBERT, Thomas, 7110 Houdeng-Goegnies (BE); HAEGEL, Yannick, 59650 Villeneuve d ascq (FR)
(74) Vertreter: Sika Patent Attorneys

(57) **Zusammenfassung**

Ein Verstärkungselement zur Verstärkung eines Strukturelementes eines Kraftfahrzeuges umfasst einen Träger und ein darauf angeordnetes expandierbares Material. Der Träger hat eine erste Seitenwand und eine zweite Seitenwand und ein die Seitenwände verbindendes Zwischenstück. Das Verstärkungselement ist in einem Spritzgussverfahren hergestellt, wobei die Seitenwände im Wesentlichen in einer Entformungsrichtung des Spritzgussverfahrens ausgerichtet sind. Die Seitenwände haben auf ihren Aussenseiten jeweils einen ersten Bereich und einen zweiten Bereich, wobei der erste Bereich mit expandierbarem Material bedeckt ist und der zweite Bereich nicht mit expandierbarem Material bedeckt ist.

## Beschreibung

Die Erfindung betrifft ein Verstärkungselement zur Verstärkung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

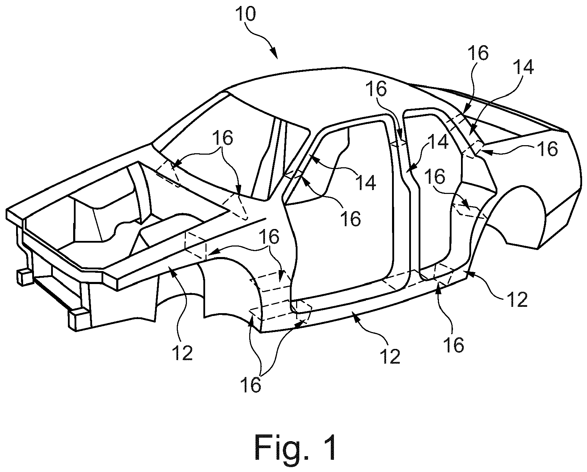

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an solchen und ähnlichen bekannten Verstärkungselementen ist es, dass oftmals bei einer Schäumung eines Schaummaterials zur Verklebung des Trägers mit dem Strukturelement zu viel Schaum entsteht, welcher dann auch in Bereiche vordringt, wo dies unerwünscht ist. Je nach Lage des Verstärkungselementes bezüglich der Schwerkraft und je nach Dimensionierung des Verstärkungselementes kann dieses Problem mehr oder weniger stark ausgeprägt sein.

Der Erfindung liegt daher die Aufgabe zugrunde, ein verbessertes Verstärkungselement zur Verfügung zu stellen, welches insbesondere eine übermässige Schäumung verhindert, und welches zudem eine Schäumung in einem vordefinierten Raum ermöglicht.

Diese Aufgabe wird gelöst durch ein Verstärkungselement zur Verstärkung eines Strukturelementes eines Kraftfahrzeuges, das Verstärkungselement umfassend: einen Träger, welcher eine erste Seitenwand und eine zweite Seitenwand und ein die Seitenwände verbindendes Zwischenstück hat; und ein expandierbares Material, welches eine Expansionsrate von höchstens 500% hat und welches jeweils auf Aussenseiten der Seitenwände angeordnet ist; wobei das Verstärkungselement in einem Spritzgussverfahren hergestellt ist und wobei die Seitenwände im Wesentlichen in einer Entformungsrichtung des Spritzgussverfahrens ausgerichtet sind, und wobei die erste und/oder die zweite Seitenwand auf der Aussenseite einen ersten Bereich hat, welcher mit expandierbarem Material bedeckt ist, und einen an diesen ersten Bereich in Entformungsrichtung anschliessenden zweiten Bereich, welcher nicht mit expandierbarem Material bedeckt ist.

Diese Lösung hat zunächst den Vorteil, dass durch das Vorsehen eines zweiten Bereiches, welcher nicht mit expandierbarem Material bedeckt ist, eine Zone zwischen dem Träger und dem Strukturelement geschaffen wird, in welcher sich das expandierbare Material bei einer Expansion gezielt ausbreiten kann. Dadurch wird es dem expandierbaren Material ermöglicht, sowohl in Richtung des Strukturelementes als auch quer zu dieser Richtung zu schäumen, ohne dabei einen erwünschten Schäumungsbereich zu verlassen. Dadurch kann zuverlässig verhindert werden, dass das expandierbare Material bei der Schäumung einen Bereich zwischen den Seitenwänden des Trägers und einer jeweiligen benachbarten Wand des Strukturelementes verlässt.

Ein weiterer Vorteil ist darin zu sehen, dass durch diese gezielte Anordnung des expandierbaren Materials auf bestimmten Bereichen der Aussenseiten der Seitenwände des Trägers das expandierbare Material gezielter und effizienter eingesetzt werden kann. Dadurch kann insgesamt ein Materialeinsatz des expandierbaren Materials optimiert und verkleinert werden, wodurch ein Kostenvorteil entsteht.

Zudem kann durch diese gezielte Schäumung in eine vorgesehene Zone hinein, welche seitlich des expandierbaren Materials auf dem Träger vorliegt, erreicht werden, dass bei der Expansion kein Material in unerwünschte Bereiche des Strukturelementes vordringen kann.

Der Begriff "Expansionsrate" beschreibt im Zusammenhang dieser Erfindung den Anteil des ursprünglichen Volumens des expandierbaren Materiales, welcher durch den Expansionsvorgang hinzukommt.

Demnach wird bei einer Expansionsrate von 100% ein Volumen durch die Expansion verdoppelt (bestehendes Volumen plus 100% des bestehenden Volumens), bei einer Expansionsrate von 300% wird ein Volumen durch die Expansion vervierfacht (bestehendes Volumen plus 300% des bestehenden Volumens).

In einer beispielhaften Ausführungsform sind die Seitenwände höchstens 10° von der Entformungsrichtung abgeneigt. In einer beispielhaften Weiterbildung sind die Seitenwände um höchstens 8° von der Entformungsrichtung abgeneigt, insbesondere um höchstens 6° von der Entformungsrichtung abgeneigt.

Da die Seitenwände im Wesentlichen entlang der Entformungsrichtung verlaufen, ist es oftmals notwendig, diese Seitenwände leicht anzuwinkeln relativ zur Entformungsrichtung, damit das spritzgegossene Teil aus der Form gelöst werden kann. Um dennoch möglichst parallel verlaufende Seitenwände zu ermöglichen, wird dieser Winkel der Seitenwände relativ zur Entformungsrichtung mit Vorteil möglichst klein gehalten.

In Versuchen hat sich gezeigt, dass ein Winkel von ungefähr 5° relativ zur Entformungsrichtung sowohl eine Entformung beim Spritzgussverfahren ermöglicht als auch nur eine kleine Abweichung von einer Parallelität der beiden Seitenwände zueinander zur Folge hat.

In einer beispielhaften Ausführungsform ist das Zwischenstück im Wesentlichen senkrecht zur Entformungsrichtung ausgebildet.

In einer beispielhaften Ausführungsform ist das Zwischenstück als durchgehende Platte, welche sich zwischen den beiden Seitenwänden erstreckt, ausgebildet.

In einer alternativen beispielhaften Ausführungsform besteht das Zwischenstück aus mehreren rippenartigen Strukturen, welche die beiden Seitenwände miteinander verbinden.

In einer beispielhaften Ausführungsform liegt das Zwischenstück im Wesentlichen in einer Ebene.

In einer alternativen Ausführungsform ist das Zwischenstück unregelmässig geformt und liegt nicht in einer Ebene.

In einer beispielhaften Ausführungsform hat die erste und/oder die zweite Seitenwand eine Stufe zwischen dem ersten und dem zweiten Bereich.

In einer beispielhaften Weiterbildung hat diese Stufe eine Höhe zwischen 0,5 und 2 mm, senkrecht zur Entformungsrichtung gemessen.

Das Vorsehen einer solchen Stufe hat den Vorteil, dass dadurch für das Spritzgussverfahren eine Anschlagstelle für die obere Formhälfte der Spritzgussform gebildet wird. Dadurch kann das nachträglich eingespritzte expandierbare Material in eine gut geschlossenen Kammer eingespritzt werden.

Indem eine Höhe dieser Stufe möglichst klein gehalten wird, lässt sich der positive Effekt für das Spritzgussverfahren nutzen, ohne dass dabei eine wesentliche Änderung in der Gesamtwirkungsweise des Verstärkungselementes im Strukturelement zustande kommt.

In einer beispielhaften Ausführungsform beträgt eine Breite des zweiten Bereiches, gemessen in Entformungsrichtung, zwischen 10% und 50% einer Breite des ersten Bereiches, gemessen in Entformungsrichtung.

In einer beispielhaften Weiterbildung beträgt die Breite des zweiten Bereiches zwischen 20 und 40% einer Breite des ersten Bereiches.

In einer beispielhaften Ausführungsform beträgt die Breite des ersten Bereiches zwischen 3 und 50 mm, bevorzugt zwischen 8 und 30 mm.

In einer beispielhaften Ausführungsform beträgt die Breite des zweiten Bereiches zwischen 1 und 20 mm, bevorzugt zwischen 3 und 10 mm.

In einer beispielhaften Ausführungsform ist auf der Aussenseite der ersten und/oder zweiten Seitenwand eine Wand ausgebildet, welche in Entformungsrichtung anschliessend an den ersten Bereich angeordnet ist, wobei die Wand und der zweite Bereich jeweils auf gegenüberliegenden Seiten des ersten Bereiches liegen.

In einer beispielhaften Weiterbildung sind die Wand und das expandierbare Material im Wesentlichen gleich hoch.

In einer beispielhaften Ausführungsform sind die Wand und das expandierbare Material bündig auf einer Aussenseite.

Das Vorsehen einer solchen Wand auf den Aussenseiten der Seitenwände hat den Vorteil, dass dadurch eine Expansion des expandierbaren Materials auf diejenige Seite gelenkt werden kann, auf welcher der freie zweite Bereich angeordnet ist. Dadurch kann eine Expansion des expandierbaren Materials gezielt gegen das Blech des Strukturelementes und in Richtung des zweiten Bereiches der Seitenwand gelenkt werden.

In einer beispielhaften Ausführungsform sind die erste und zweite Seitenwand um das Zwischenstück herum angeordnet und bilden eine durchgehende Seitenwand des Trägers.

Eine solche durchgehende Seitenwand bietet den Vorteil, dass dadurch der Träger des Verstärkungselementes über den ganzen Querschnitt an das Strukturelement geklebt werden kann durch das expandierbare Material.

In einer beispielhaften Ausführungsform hat das expandierbare Material eine Dicke von 2 bis 5 mm, gemessen senkrecht zur Entformungsrichtung.

In einer beispielhaften Ausführungsform ist der Träger aus einem Kunststoff gebildet, insbesondere aus Polyamid.

In einer beispielhaften Weiterbildung ist der Träger aus einem faserverstärkten Kunststoff gebildet, insbesondere aus einem glasfaserverstärkten Kunststoff.

In einer beispielhaften Ausführungsform hat das expandierbare Material eine Expansionsrate von höchstens 400%, bevorzugt von höchstens 300%, besonders bevorzugt von höchstens 250%.

Als expandierbares Material kann grundsätzlich verschiedenartiges Material eingesetzt werden, welches zur Schäumung gebracht werden kann. Dieses Material kann dabei vorzugsweise Verstärkungseigenschaften aufweisen.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200 °C, insbesondere von 120 °C bis 190 °C, bevorzugt von 160 °C bis 180 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Flüssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Ein beispielhaftes expandierbares Material mit Verstärkungseigenschaften wird unter dem Handelsnamen SikaReinforcer^{®} 941 von der Sika Corp., USA, vertrieben. Dieses ist weiterhin beschrieben in US 6,387,470.

Die eingangs gestellte Aufgabe wird zudem gelöst durch ein System eines verstärkten Strukturelementes eines Kraftfahrzeuges, das System umfassend: ein Verstärkungselement gemäss obiger Beschreibung; und ein Strukturelement, welches ein erstes Blech und ein zweites Blech umfasst, wobei zwischen den Blechen ein Hohlraum besteht; wobei das Verstärkungselement in einem Hohlraum des Strukturelementes angeordnet ist, so dass die Entformungsrichtung des Verstärkungselementes im Wesentlichen in Richtung einer Längsachse des Hohlraums verläuft.

In einer beispielhaften Ausführungsform ist das Verstärkungselement derart ausgestaltet, dass der zweite Bereich vor einer Expansion des expandierbaren Materials frei ist von expandierbarem Material und nach einer Expansion des expandierbaren Materials vollständig bedeckt ist mit expandierbarem Material.

In einer beispielhaften Ausführungsform ist das Verstärkungselement derart ausgestaltet und im Strukturelement angeordnet, dass nach einer Expansion des expandierbaren Materials beide Bereiche vollflächig durch das expandierbare Material mit dem Strukturelement verklebt sind.

In einer beispielhaften Ausführungsform beträgt eine Distanz zwischen Verstärkungselement und Strukturelement zwischen 1 und 8 mm, bevorzugt zwischen 1 und 6 mm, besonders bevorzugt zwischen 2 und 4 mm.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a und 2b: eine beispielhafte Darstellung eines Verstärkungselementes; und
- Fig. 3a bis 4b: eine beispielhafte Darstellung eines Systems eines verstärkten Strukturelementes.

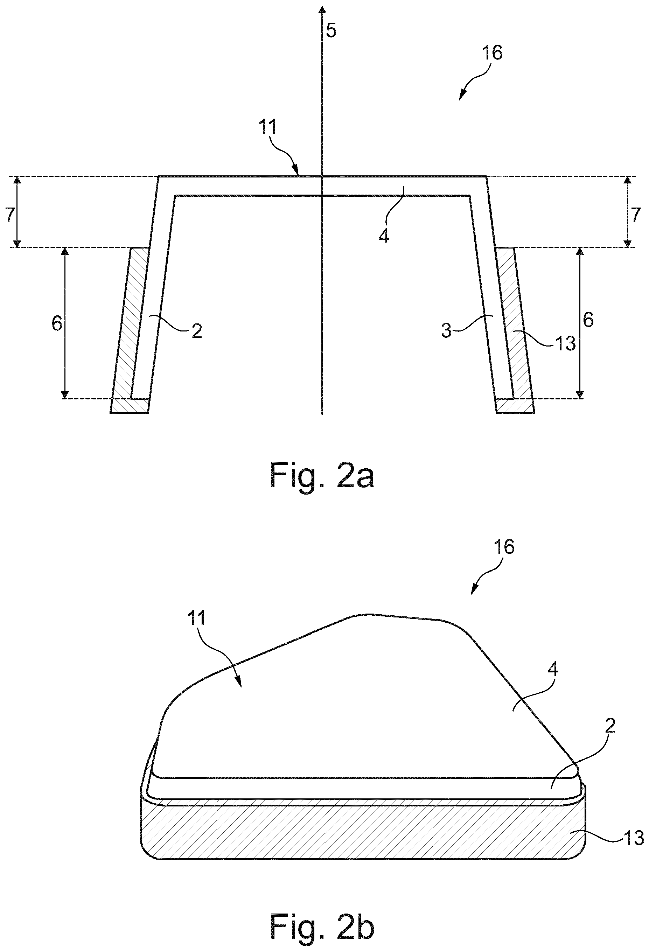

In den Fig. 2a und 2b ist beispielhaft und schematisch ein Verstärkungselement 16 dargestellt. Dabei ist das Verstärkungselement 16 in Fig. 2a in einer Querschnittsdarstellung gezeigt, und in Fig. 2b ist dasselbe Verstärkungselement 16 in einer räumlichen Darstellung gezeigt.

Das Verstärkungselement 16 hat einen Träger 11, welcher eine erste Seitenwand 2, eine zweite Seitenwand 3 und ein Zwischenstück 4 umfasst. Auf Aussenseiten der Seitenwände 2, 3 ist expandierbares Material 13 angeordnet. Dabei haben die Aussenseiten der Seitenwände 2, 3 jeweils einen ersten Bereich 6 und einen zweiten Bereich 7, welche anschliessend aneinander in Entformungsrichtung 5 angeordnet sind. Das expandierbare Material 13 ist dabei lediglich auf den ersten Bereichen 6 angeordnet, nicht aber auf den zweiten Bereichen 7. Dies hat zur Folge, dass bei einer Expansion des expandierbaren Materiales 13 das expandierbare Material in Richtung des Strukturelementes, aber auch in Richtung der zweiten Bereiche 7 schäumt. Dadurch kann besser definiert werden, welche Bereiche im Hohlraum des Strukturelementes nach einer Expansion des expandierbaren Materials 13 mit expandiertem Material ausgefüllt sind.

Das Verstärkungselement 16 in diesem Ausführungsbeispiel hat eine Entformungsrichtung 5. Zur besseren Entformung im Spritzgusswerkzeug sind dabei die Seitenwände 2, 3 leicht angewinkelt relativ zu dieser Entformungsrichtung 5. Oftmals ist es wünschenswert, diese Seitenwände 2, 3 möglichst parallel zueinander auszubilden. Deshalb wird ein möglichst kleiner Winkel zur Entformungsrichtung 5 gewählt, um eine saubere Entformung aus dem Spritzgusswerkzeug zu ermöglichen.

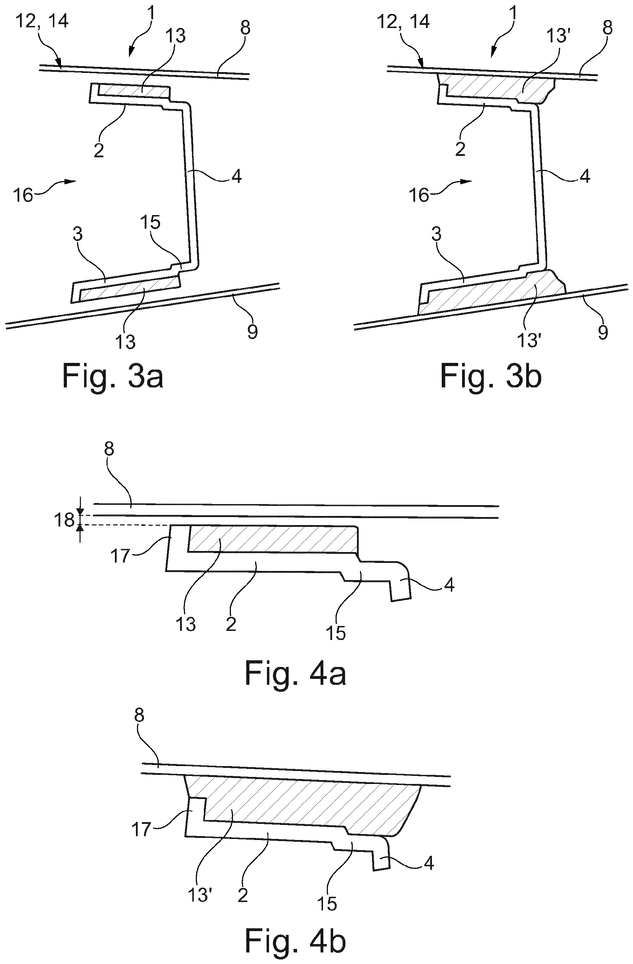

In den Fig. 3a bis 4b ist jeweils ein Verstärkungselement 16 in einem Strukturelement 12, 14 dargestellt. Dabei ist jeweils in den Fig. 3a und 4a ein Zustand vor einer Expansion des expandierbaren Materials 13 dargestellt, und in den Fig. 3b und 4b ist jeweils ein Zustand nach einer Expansion des expandierbaren Materials 13 dargestellt, so dass das expandierte Material 13' ersichtlich ist.

In diesem Ausführungsbeispiel hat der Träger 11 im Unterschied zum Ausführungsbeispiel in den Fig. 2a und 2b sowohl eine Stufe 15 in den Seitenwänden 2, 3 als auch eine Wand 17 auf den Aussenseiten der Seitenwände 2, 3.

Die Wand 17, welche direkt anschliessend an das expandierbare Material 13 angeordnet ist, bewirkt, dass bei der Expansion das expandierbare Material 13 sowohl in Richtung der Bleche 8, 9 des Strukturelementes 12, 14 als auch in Richtung der freien zweiten Bereiche der Aussenseiten der Seitenwände 2, 3 expandiert. Dadurch kann erreicht werden, dass das expandierte Material 13 in die gewünschten Zonen zwischen dem Träger 11 und den Blechen 8, 9 des Strukturelementes 12, 14 gelenkt wird.

Zwischen dem Verstärkungselement 16 und dem Strukturelement 12, 14 ist eine Distanz 18 vorgesehen. Diese Distanz beträgt vorzugsweise in etwa 3 bis 5 mm. Dadurch kann gewährleistet werden, dass die Bleche 8, 9 vor der Expansion des expandierbaren Materials 13 beschichtet werden können, und dass aber gleichzeitig eine mechanisch robuste Verklebung des Trägers 11 mit dem Strukturelement 12, 14 durch das expandierte Material 13' erreicht werden kann.

### Bezugszeichenliste

- 1: System
- 2: erste Seitenwand
- 3: zweite Seitenwand
- 4: Zwischenstück
- 5: Entformungsrichtung
- 6: erster Bereich
- 7: zweiter Bereich
- 8: erstes Blech
- 9: zweites Blech
- 10: Karosserie
- 11: Träger
- 12: Strukturelement
- 13: expandierbares Material
- 13': expandiertes Material
- 14: Strukturelement
- 15: Stufe
- 16: Verstärkungselement
- 17: Wand
- 18: Distanz

## Patentansprüche

1. Verstärkungselement (16) zur Verstärkung eines Strukturelementes (12, 13) eines Kraftfahrzeuges, das Verstärkungselement (16) umfassend:
einen Träger (11), welcher eine erste Seitenwand (2) und eine zweite Seitenwand (3) und ein die Seitenwände (2, 3) verbindendes Zwischenstück (4) hat; und
ein expandierbares Material (13), welches eine Expansionsrate von höchstens 500% hat und welches jeweils auf Aussenseiten der Seitenwände (2, 3) angeordnet ist;
wobei das Verstärkungselement (16) in einem Spritzgussverfahren hergestellt ist und wobei die Seitenwände (2, 3) im Wesentlichen in einer Entformungsrichtung (5) des Spritzgussverfahrens ausgerichtet sind, und
wobei die erste und/oder die zweite Seitenwand (2, 3) auf der Aussenseite einen ersten Bereich (6) hat, welcher mit expandierbarem Material (13) bedeckt ist, und einen an diesen ersten Bereich (6) in Entformungsrichtung (5) anschliessenden zweiten Bereich (7) hat, welcher nicht mit expandierbarem Material (13) bedeckt ist.

2. Verstärkungselement (16) nach Anspruch 1, wobei die Seitenwände (2, 3) höchstens 10° von der Entformungsrichtung (5) abgeneigt sind.

3. Verstärkungselement (16) nach einem der vorhergehenden Ansprüche, wobei das Zwischenstück (4) im Wesentlichen senkrecht zur Entformungsrichtung (5) ausgerichtet ist.

4. Verstärkungselement (16) nach einem der vorhergehenden Ansprüche, wobei die erste und/oder zweite Seitenwand (2, 3) eine Stufe (15) zwischen dem ersten Bereich (6) und dem zweiten Bereich (7) hat.

5. Verstärkungselement (16) nach Anspruch 4, wobei die Stufe (15) eine Höhe zwischen 0,5 und 2 mm hat, senkrecht zur Entformungsrichtung (5) gemessen.

6. Verstärkungselement (16) nach einem der vorhergehenden Ansprüche, wobei eine Breite des zweiten Bereiches (7), gemessen in Entformungsrichtung (5), zwischen 10% und 50% einer Breite des ersten Bereiches (6), gemessen in Entformungsrichtung (5), beträgt.

7. Verstärkungselement (16) nach einem der vorhergehenden Ansprüche, wobei die Breite des ersten Bereiches (6) zwischen 3 und 50 mm beträgt, und/oder wobei die Breite des zweiten Bereiches (7) zwischen 1 und 20 mm beträgt.

8. Verstärkungselement (16) nach einem der vorhergehenden Ansprüche, wobei auf der Aussenseite der ersten und/oder zweiten Seitenwand (2, 3) eine Wand (17) ausgebildet ist, welche in Entformungsrichtung (5) anschliessend an den ersten Bereich (6) angeordnet ist, wobei die Wand (17) und der zweite Bereich (7) jeweils auf gegenüberliegenden Seiten des ersten Bereiches (6) liegen.

9. Verstärkungselement (16) nach Anspruch 8, wobei die Wand (17) und das expandierbare Material (13) im Wesentlichen gleich hoch sind.

10. Verstärkungselement (16) nach einem der vorhergehenden Ansprüche, wobei die erste und zweite Seitenwand (2, 3) um das Zwischenstück (4) herum angeordnet sind und eine durchgehende Seitenwand bilden.

11. Verstärkungselement (16) nach einem der vorhergehenden Ansprüche, wobei das expandierbare Material (13) eine Dicke von 2 bis 5 mm hat, gemessen senkrecht zur Entformungsrichtung (5).

12. System (1) eines verstärkten Strukturelementes (12, 14) eines Kraftfahrzeuges, das System (1) umfassend:
ein Verstärkungselement (16) nach einem der Ansprüche 1 bis 11; und
ein Strukturelement (12, 14), welches ein erstes Blech (8) und ein zweites Blech (9) umfasst, wobei zwischen den Blechen (8, 9) ein Hohlraum besteht;
wobei das Verstärkungselement (16) im Hohlraum des Strukturelementes (12, 14) angeordnet ist, so dass die Entformungsrichtung (5) des Verstärkungselementes (16) im Wesentlichen in Richtung einer Längsachse des Hohlraums verläuft.

13. System (1) nach Anspruch 12, wobei das Verstärkungselement (16) derart ausgestaltet ist, dass der zweite Bereich (7) vor einer Expansion des expandierbaren Materials (13) frei ist von expandierbarem Material (13), und nach einer Expansion des expandierbaren Materials (13) vollständig bedeckt ist mit expandiertem Material (13').

14. System (1) nach Anspruch 13, wobei das Verstärkungselement (16) derart ausgestaltet und im Strukturelement (12, 14) angeordnet ist, dass nach einer Expansion des expandierbaren Materials (13) beide Bereiche (6, 7) vollflächig durch das expandierte Material (13') mit dem Strukturelement (12, 14) verklebt sind.

15. System (1) nach einem der Ansprüche 12 bis 14, wobei eine Distanz (18) zwischen Verstärkungselement (16) und Strukturelement (12, 14) zwischen 1 und 8 mm beträgt.
